# EUROPEAN PATENT APPLICATION

(11) **EP 4 686 071 A1**
(43) Date of publication of application: **28.01.2026**
(21) Application number: 24190800.3
(22) Date of filing: 25.07.2024
(51) Int. Cl.: H02M 3/335, H02M 3/00, H02M 1/36, H02M 1/00

(54) **CONVERTER AND CONTROL METHOD FOR DRIVING A CONVERTER**

(71) Applicant: Delta Electronics (Thailand) Public Co., Ltd., Samutprakarn 10280 (TH)
(72) Inventor: KRIEGER, Jochen, 59505 Bad Sassendorf - Lohne (DE); GAPPOEV, Sergej, 59494 Soest (DE)
(74) Representative: Hoefer & Partner Patentanwälte mbB

(57) **Abstract**

The invention concerns a converter (1), especially a resonant LLC converter, comprising a transformer (2) comprising a primary side (3) and a secondary side (4); a primary side circuit (5) comprising primary side switches (6) connected to the primary side (3) of the transformer (2); a secondary side circuit (7) comprising secondary side switches (8) connected to the secondary side (4) of the transformer (2); and a control unit (10) configured to control the primary side switches (6) and the secondary side switches (8); wherein the control unit (10) is configured to perform a steady-state operation in which a switching frequency of the primary side switches (6) and of the secondary side switches (8) is controlled to regulate output voltage (Vout) of the converter (2); and the control unit (10) is configured to perform an overshoot control operation in which an output voltage spike during a load transient is reduced by setting a control signal for the secondary side switches (8) to low or OFF. The invention also concerns a control method for driving a converter (1).

## Description

### Field of the Invention

The invention concerns a converter, especially a resonant LLC converter, and a control method for driving the converter.

### Background of the Invention

In general, converters and control methods for converters are known, for example from US2022/0060120, US2008/0111531, US2015/0263619, US2016/0380544.

For example, aforementioned US2016/0380544 discloses power converters and a method for reducing voltage changes at an output of a power converter. Therein, a switching power converter includes an input, an output for providing an output voltage, at least one switch capable of causing a voltage overshoot of the output voltage when the switch is turned on, and a controller. The controller thereof is configured to sense the output voltage, compare the sensed output voltage to a voltage reference, and adjust operation of the power converter based on the comparison of the sensed output voltage and the voltage reference to maintain the output voltage. The controller is further configured to decrease the voltage reference from a normal operation value to an overshoot reduction value before turning on the switch to decrease the output voltage and reduce an overshoot of the output voltage in response to turning on the switch.

However, these common control methods commonly have limited control loop bandwidth, which leads to output voltage overshoots during dynamic load transients. Furthermore, such known methods commonly suffer from delay times until PWM ("pulse width modulation") outputs are updated to a new switching frequency during load transients. This delay time is significant, especially if multiple or many PWM modules are used, for example in interleaved LLC converters. Furthermore, their synchronization becomes more difficult due to their delay times.

### Summary

It is an object of the present invention to overcome these deficiencies. In particular, it is an object of the present invention to provide a converter, especially a resonant LLC converter, and a control method for driving a converter which have improved overshoot response during dynamic load transients.

The solution of these objects is achieved by the subject matter of the independent claims. The dependent claims contain advantageous embodiments of the present invention.

In particular, the solution of these objects is achieved by the converter according to claim 1.

The converter comprises a transformer with a primary side and a secondary side. The primary side circuit comprises primary side switches connected to the primary side of the transformer. The secondary side circuit comprises secondary side switches connected to the secondary side of the transformer. Furthermore, the converter comprises a control unit. The control unit is configured to control the primary side switches and the secondary side switches. Therein, the control unit is configured to perform a steady-state operation in which a switching frequency of the primary and secondary side switches is controlled to regulate output voltage of the converter. The control unit is further configured to perform an overshoot control operation. In the overshoot control operation, an output voltage spike during a load transient is reduced by setting a control signal for the secondary side switches to low or OFF.

Thereby, the converter, particularly the control unit, is capable of quickly, especially immediately, reacting to an overshoot by setting the control signal of the secondary side switches to low or OFF. In particular, the control unit turns the secondary side switches off during overshoot control operation. With this, a delay time for the overshoot reaction is very short, and damages to the components, especially also to the load connected to the converter, can be reduced or prevented.

In this regard, it is noted that the control unit is configured to, during the overshoot control operation, set the control signal to the secondary side switches to "low or OFF". This is preferably to be understood as setting the control signal to the secondary side switches so as to turn the secondary switches OFF, i.e. to a non-conducting state with respect to their main switching operation (i.e. "non-conducting state" does not refer to a body diode or the like, but rather the main switching operation of the switch). This is preferably to mean that also control signals with a logic inversion, in which for example a high signal (for example, a digital 1) switches OFF, can also be embodiments of the present overshoot control operation setting the control signal to the secondary side switches to OFF.

In particular, the control unit is configured to further operate the primary side switches during overshoot control operation. In other words, the control unit does not shut off the entire converter during the overshoot control operation.

Preferably, the control unit is configured to, in the overshoot control operation, set the respective control signals for all secondary side switches to low. In other words, the control unit preferably turns off all secondary side switches during overshoot control operation.

Advantageously, the overshoot control operation is performed during and immediately following a load transient. In particular, the overshoot control operation is performed during and immediately following a load transient that does not go to zero, i.e. a load transient between two non-zero load voltages. In particular, the overshoot control operation is not performed during zero load voltages. Further, in particular, the overshoot control operation is performed only during non-zero load voltages.

Preferably, the converter comprises a sensing unit configured to sense an output voltage, wherein the control unit is configured to receive the sensed output voltage and perform steady-state operation and/or overshoot control operation according to the sensed output voltage.

In one advantageous embodiment, the control unit is further configured to perform the steady-state operation before and after the overshoot control operation. In other words, the control unit is configured to perform the steady-state operation and the overshoot control operation intermittently. For example, after steady-state operation, the control unit can perform the overshoot control operation, then the steady-state operation and then the overshoot control operation again.

Preferably, the control unit is configured to control the primary side switches with the same switching frequency during steady-state operation and during overshoot control operation. In other words, preferably, a primary side switch control is not changed during overshoot control operation. Thereby, no change in primary side switch control is necessary during overshoot control operation and steady-state operation such that control of the converter is simplified and effective and quick reaction to voltage overshoot is achieved.

Further preferably, the control unit is configured to perform the overshoot control operation for a predetermined time period depending on component parameters, especially depending on an output capacitance of the converter. Therein, the predetermined time period is preferably equal to or less than 50 µs. Preferably, the predetermined time period is 20 µs. In other words, preferably, after the predetermined time period, the control unit is configured to carry out steady-state operation again.

In some advantageous embodiments, the control unit is configured to sense the output voltage of the converter and compare it with a predetermined threshold value. Therein, the control unit is configured to perform the overshoot control operation if the output voltage is equal to or greater than the threshold value. Preferably, the threshold value is predetermined and based on, for example, maximum allowable voltages for the components of the converter, especially the switches thereof, and/or for example may be a value predetermined for or output by the connected load.

Preferably, the control unit is configured to calculate a slew rate of the output voltage, i.e. dV/dt, wherein the threshold value is a predetermined slew rate threshold value. In below explanations, with the output voltage being denoted "Vout", the slew rate is correspondingly denoted "dVout/dt". Thereby, the control unit can advantageously quickly react to possible overshoot before a high overshoot voltage is output.

Advantageously, the control unit is configured to perform a transition operation after the overshoot control operation to transition to the steady-state operation. Thereby, further possible overshoots or strong variations in output voltage can be advantageously reduced or prevented.

Preferably, the foregoing described transition operation is combined with the foregoing described intermittent operation by the control unit. In other words, between an iteration of overshoot control and steady-state control, the control unit is configured to operation in transition operation.

Preferably, the control unit is configured to, in the transition operation, control the secondary side switches with a secondary transition duty cycle, i.e. a duty cycle of secondary side switches during transition operation. Further, in the steady-state operation, the control unit is configured to control the secondary side switches with a secondary steady-state duty cycle, i.e. a duty cycle of secondary side switches during stead-state operation. Therein, the secondary transition duty cycle is lower than the steady-state duty cycle. In other words, the control unit is configured to control the secondary side switches with a duty cycle which is lower during the transition operation than during the steady-state. This advantageously allows a smooth transition between overshoot control operation and steady-state operation via the transition operation.

Preferably, the secondary transition duty cycle is time-dependent and especially increasing during transition operation. Preferably, once the secondary transition duty cycle is slightly below the secondary steady-state duty cycle, the control unit is configured to perform steady-state operation with the secondary steady-state duty cycle.

Preferably a minimum value of the secondary transition duty cycle, especially at the transition operation, roughly one-tenth of the secondary steady-state duty cycle. In other words, after finishing overshoot control operation, the control unit is configured to control the secondary side switches with a duty cycle much smaller than the duty cycle during steady-state operation. Thereby, a transition between overshoot and steady-state is made further smoother, thus reducing or preventing strong output voltage changes or overshoots.

Further advantageously, a duration of the transition operation is equal to or less than 300 µs. In other words, preferably, the control unit is configured to continue steady-state operation after 300 µs of transition operation after the overshoot control operation. Thereby, normal operation, i.e. steady-state operation of the converter is initiated after a short time.

Preferably, the secondary side switches respectively comprise body diodes through which current flows during overshoot control operation. In other words, although the secondary side switches are turned off during overshoot control operation, current will further flow through their body diodes. Thereby, the secondary switches, in particular their body diodes, introduce an increased voltage drop during overshoot control operation. This preferably leads to a reduced resonant tank current due to an increased rectification impedance. This further leads to a drop in the output voltage and a reduced output voltage spike during the load transient.

In general, the switches of the primary side and/or of the secondary side are semiconductor switches, especially FETs. Advantageously, the secondary side switches are respectively MOSFETs. In some alternative embodiments, the secondary side switches are preferably IGBTs, wherein in the preferable case described above with respect to body diodes, the secondary side switches are further connected in parallel to extrinsic or dedicated diodes.

Preferably, the secondary side circuit is a rectifier circuit.

Advantageously, the secondary side circuit is a full wave rectification circuit or a center tap circuit. In such configuration examples, the foregoing described overshoot control operation by the control unit is particularly effective.

Preferably, the primary side circuit is half-bridge or a full-bridge, especially an interleaved full-bridge or a single phase full-bridge, circuit. The foregoing described overshoot control operation by the control unit is particularly effective in such configuration examples.

The foregoing described embodiments may be combined with one another. The foregoing described embodiments provide a converter capable of quickly and effectively reacting to load transients, and particularly without or with reduced voltage overshoots. Thereby, damage to components of the converter and/or the load can be effectively prevented or reduced.

The present invention also concerns a control method for driving a converter. Therein, the converter comprises a transformer with a primary side and a secondary side, a primary side circuit comprising primary side switches connected to the primary side of the transformer, and a secondary side circuit comprising secondary side switches connected to the secondary side of the transformer. The control method comprises: performing a steady-state operation by controlling a switching frequency of the primary and secondary side switches to regulate an output voltage of the converter; and performing an overshoot control operation of setting a control signal for the secondary side switches to low for reducing an output voltage spike during a load transient.

In particular, the control method is adapted to drive the converter according to any one or a combination of the foregoing described embodiments. Furthermore therein, foregoing described configurations of the control unit are to be understood as method operations or method steps in the present control method for driving a converter. Preferably, the foregoing described control unit is configured to carry out the control method for driving a converter according to the foregoing and the following.

Thereby, a control method for driving a converter is achieved which can effectively and quickly reduce or prevent voltage overshoots, particularly in reaction to load transients.

Preferably, the control method comprises, in order, performing the steady-state operation, performing the overshoot control operation, and then performing the steady-state operation. In other words, the control method preferably comprises performing the steady-state operation and the overshoot control operation intermittently.

Preferably, the control method further comprises a transition operation after the overshoot control operation to transition to the steady-state operation. In other words, preferably, the control method comprises not immediately starting the steady-state operation after the overshoot control operation, but carrying out a transition operation therebetween. Thereby, further voltage spikes or overshoots and possible damages to components may be reduced or prevented. Preferably, the presently described transition operation is combinable with the foregoing described embodiments of the control unit pertaining to the transition operation.

Preferably in the control method, the secondary side switches are controlled with a secondary transition duty cycle during the transition operation. Furthermore, the secondary side switches are controlled with a secondary steady-state duty cycle during the steady-state operation. Therein the secondary transition duty cycle is lower than the secondary steady-state duty cycle.

Preferably, the presently described duty cycles are combinable with the foregoing described embodiments of the control unit pertaining to the respective duty cycles, particularly their minimum values and their durations.

Preferably, the secondary transition duty cycle is controlled so as to be time-dependent. Preferably, the secondary transition duty cycle is controlled so as to increase from the start of the transition operation to the end of the transition operation, and in particular to the start of the steady-state operation.

Further advantageously, the control method further comprises sensing output voltage of the converter and comparing the sensed output voltage with a predetermined threshold value, wherein the overshoot control operation is performed if the output voltage is equal to or greater than the threshold value.

Preferably, the presently described output voltage sensing and comparison with a threshold value are combinable with the foregoing described embodiments of the control unit pertaining to the output voltage sensing unit and corresponding threshold value(s).

Thereby, the present invention also provides a control method for a converter which can achieve a quick and effective reaction to voltage overshoot, thereby reducing or preventing damage to components of the converter and/or to a load connected thereto.

The foregoing described control unit preferably comprises one or more PWM modules, preferably one for each primary and secondary side switch.

Further details, advantages, and features of the preferred embodiments of the present invention are described in detail with reference to the figures. Therein:

### Brief Description of the Drawings

Fig. 1 shows a schematic circuit diagram of a converter according to a first embodiment of the present invention;
Fig. 2a shows a measurement result diagram of a converter controlled in a comparative manner;
Fig. 2b shows a measurement result diagram of a converter controlled in a comparative manner;
Fig. 2c shows a measurement result diagram of a converter controlled in a comparative manner;
Fig. 3a shows a measurement result diagram of a converter controlled according to the first embodiment of the present invention;
Fig. 3b shows a measurement result diagram of a converter controlled according to the first embodiment of the present invention;
Fig. 3c shows a measurement result diagram of a converter controlled according to the first embodiment of the present invention;
Fig. 4a shows a further measurement result diagram of a converter controlled in a comparative manner; and
Fig. 4b shows a measurement result diagram of a converter controlled according to the first embodiment of the present invention.

### Description of the Embodiments

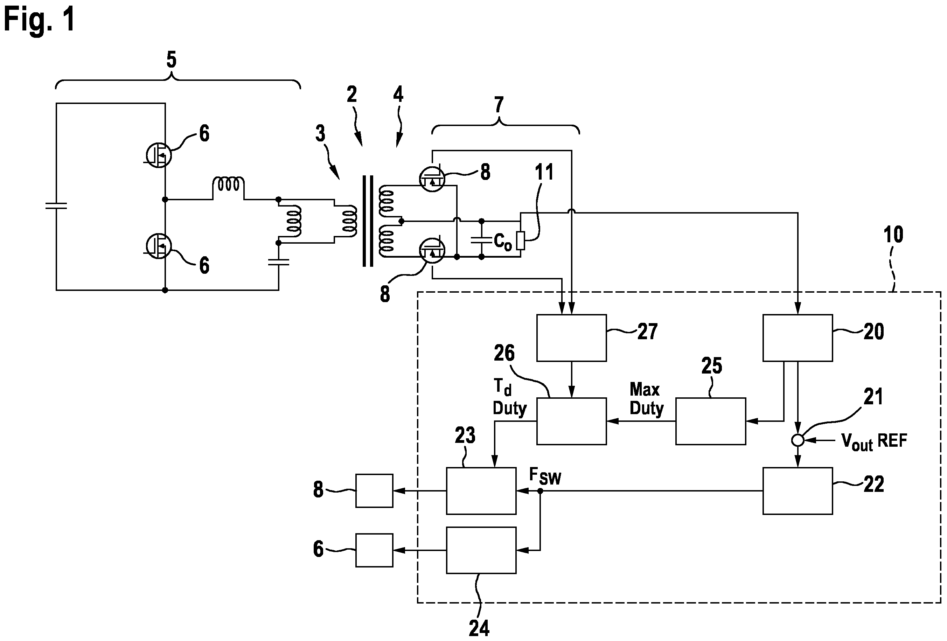

A first embodiment of the present invention will be described with reference to Fig. 1, wherein Fig. 1 shows a schematic circuit diagram of a converter 1 according to the first embodiment. In particular, Fig. 1 simultaneously shows the circuit diagram for the converter 1 along with block diagram elements for explaining aspects of a control unit 10 and its operations for driving the converter 1.

The converter 1 of the present embodiment is, as an illustrative example, a resonant LLC converter 1. The converter 1 comprises a transformer 2 with a primary side 3 and a secondary side 4.

A primary side circuit 5 comprises primary side switches 6 connected to the primary side 3 of the transformer 2. As shown in Fig. 1, the primary side circuit 5 is in this example a half-bridge. In alternative embodiments, the primary side circuit 5 is full bridge and is configured for example interleaved or single phase.

A secondary side circuit 7 comprises secondary side switches 8 connected to the secondary side 4 of the transformer 2. In the present embodiment, the secondary side circuit 7 is a center tapped synchronous rectifier circuit. In alternative embodiments, the secondary side circuit 7 is for example a full wave rectification circuit.

Furthermore, the converter 1 comprises a control unit 10. The control unit 10 herein preferably has a voltage control loop and controls the synchronous rectification with overshoot control.

Herein, the control unit 10 is configured to perform a steady-state operation in which a switching frequency of the primary side switches 6 and of the secondary side switches 8 is controlled so as to regulate output voltage Vout of the converter 2. For instance, the steady-state operation is a normal mode of functioning for the converter 1 under constant load, especially without load transients.

The control unit 10 is further configured to perform an overshoot control operation. Therein, an output voltage spike during a load transient is reduced by setting a control signal for the secondary side switches 8 to low.

The steady-state operation and the overshoot control operation will now be explained, particularly in view of the schematic block diagram in Fig. 1. Herein, the blocks will be described as modules or sub-units of the control unit 10 and configured to carry out the steps, and are generally understood as additionally or alternatively corresponding to method steps in driving the converter 1.

In the present embodiment, the control unit 10 is connected to gates of the primary side switches 6 and of the secondary side switches 8, respectively, and may be implemented as comprising one or more PWM units.

The output voltage Vout is sensed by a voltage output sensing unit 20, particularly via a resistor 11 of the secondary side circuit 7.

The sensed voltage Vout is then input into a comparison unit 21 and compared with a reference voltage VoutREF. For example, the reference voltage VoutREF may be a voltage required by a load connected to the converter 1. The comparison result is input into or used by a voltage controller 22. The voltage controller 22 outputs a voltage control signal, particularly as a switching frequency signal Fsw to a synchronous rectification unit 23 and a primary switching unit 24. The synchronous rectification unit 23 and the primary switching unit 24 are preferably PWM units.

The synchronous rectification unit 23 outputs a control signal to the secondary side switches 8. The primary switching unit 24 outputs a control signal to the primary side switches 6.

Thereby, the steady-state operation for supplying a load, especially according to VoutREF, is performed by the control unit 10, i.e. via the foregoing described sub-units 20 - 24.

When a voltage overshoot, for instance due to a load transient, is detected by the voltage output sensing unit 20, the voltage output sensing unit 20 outputs a control signal to an overshoot control unit 25. The overshoot control unit 25 further outputs a max duty cycle signal to a synchronous rectifier controller unit 26 ("SR controller" 26).

The SR controller 26 compares the max duty cycle signal received by the overshoot control unit 25 with a current synchronous rectification signal received by a synchronous rectification sensing unit 27 ("SR sensing unit" 27). The SR sensing unit 27 detects current (i.e. present operation) synchronous rectification operation and outputs its detection to the SR controller 26 as a feedback loop. In general, however, the aforementioned SR sensing unit 27 is not strictly necessary for controlling switching of the secondary side switches 8, as the synchronous rectification signal can also control the secondary side switches 8 with fixed timings.

The SR controller 26 then, following said comparison between max duty cycle by the overshoot control unit 25 and the current SR operation by the SR sensing unit 27, outputs resulting duty cycle Td to the synchronous rectification unit 23, which controls switching of the secondary side switches 8.

As explained above, when overshoot voltage is detected, the control unit 10 performs an overshoot control operation in which the control signal (for example by the synchronous rectification unit 23 in the present embodiment) is set to low, i.e. they are switched to the off state. In particular, the overshoot voltage is detected by calculating a slew rate of the output voltage Vout, i.e. calculating dVout/dt, and comparing it to a predetermined slew rate threshold value, i.e. determining whether it is equal to or greater than said threshold value.

In particular, the overshoot control operation is performed by the control unit 10 in reaction to the detected voltage overshoot. After the overshoot control operation, the steady-state operation is Thereby, the overshoot control operation is performed intermittently with the steady-state operation.

Furthermore, as can be taken from Fig. 1, the voltage overshoot control is in the present embodiment controlled by the SR controller 26, which outputs the corresponding control signal only to the synchronous rectification unit 23. Thereby, the steady-state operation is continued with respect to the primary side switches 6 (via the voltage controller 22). In other words, the control unit 10 is configured to control the primary side switches 6 with the same switching frequency during steady-state operation and during the overshoot control operation.

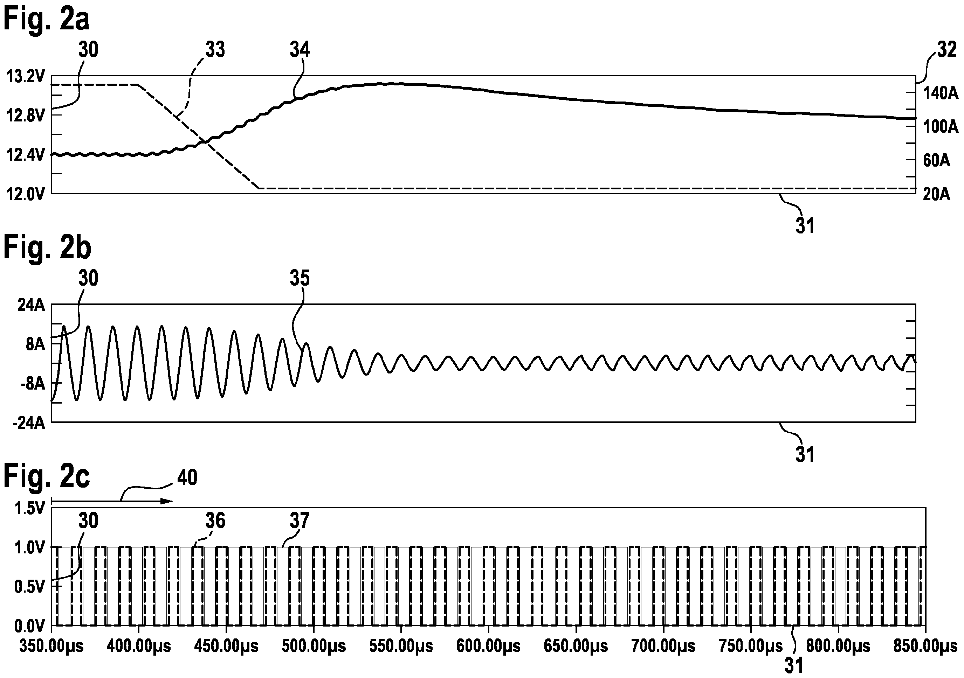

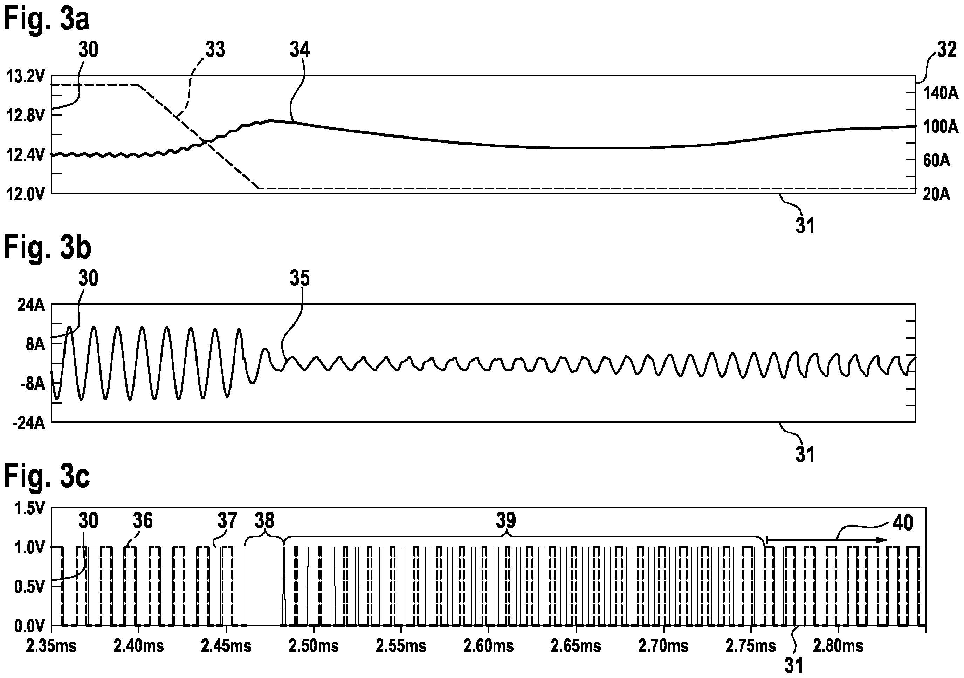

Now, with respect to Figs. 2 and 3, a comparison of driving the converter 1 without overshoot control as in conventional examples (Fig. 2) and with the overshoot control operation (Fig. 3) will be discussed.

Therein, each of Figs. 2 and 3 shows respectively three diagrams, wherein from top to bottom, Fig. 2a and 3a show a comparison graph of output voltage 34, with left ordinate 30 being voltage in volt, and of load current 33 with right ordinate 32 being current in ampere, and the abscissa being time (see abscissa 31 of Figs. 2c and 3c).

Figs. 2b and 3b respectively show, with left ordinate 30 being current in ampere and abscissa being time (see abscissa 31 of Figs. 2c and 3c), resonant current 35 of the converter 1.

Figs. 2c and 3c demonstrate signals 36, 37 output by the synchronous rectification unit 23 to the secondary side switches 8, respectively.

As shown in Fig. 2c, in the exemplary case of no overshoot control, the secondary switch synchronous rectification signals 36, 37 do not change in the case of load transient (Fig. 2a). Further, as can be seen in Fig. 2a, the voltage 34 output by the converter 1 overshoots. In an optimal case, during or following the load transient, an optimal voltage output would be roughly 12.6 V.

As shown in Fig. 3c, which will be further discussed below, during a time period 38, overshoot control as explained above is carried out by switching control signals to the secondary side switches 8 to low, i.e. off. The voltage 34, as shown in Fig. 3a shows a much lower voltage overshoot, roughly 350 mV less than that of Fig. 2a, i.e. without overshoot control operation.

Furthermore, as can be seen in Fig. 3c, the control unit 10 of the present embodiment is further configured to perform the overshoot control operation for a predetermined time period 38. This time period depends on component parameters, such as an output capacitance Co (see: Fig. 1) of the converter 1. In the present embodiment, the predetermined time period 38 is roughly 20 µs.

After the predetermined time period, the control unit 10 is configured to carry out the steady-state operation 40. In the present embodiment, the control unit 10 does not immediately start the steady-state operation, but instead is configured to perform a transition operation for a time period 39 after the overshoot control operation 38.

During the transition operation time period 39, as can be taken from the switching signals 36, 37 of Fig. 3c, the control unit 10 is configured to control the secondary side switches 8 with a secondary transition duty cycle, which is lower than a secondary steady-state duty cycle during steady-state operation.

In particular, the control unit 10 increases the secondary transition duty cycle with time such that the secondary transition duty cycle is time-dependent. Herein, the control unit 10 performs the transition operation 39 for roughly 0.3 ms.

Furthermore, a minimum value of the secondary transition duty cycle, herein at the start of the transition operation 39, is roughly one-tenth of the full secondary steady-state duty cycle at steady-state operation time period 40. In other words, during the transition operation 39, the control unit 10 increases the duty cycle of the secondary switches 8 from a minimum of roughly one-tenth to the duty-cycle of the steady-state operation 40 within roughly 0.3 ms.

Thereby, a smooth increase or transition of operation between overshoot control operation 38 and steady-state operation 40 is achieved, thereby further advantageously preventing voltage spikes or overshoots.

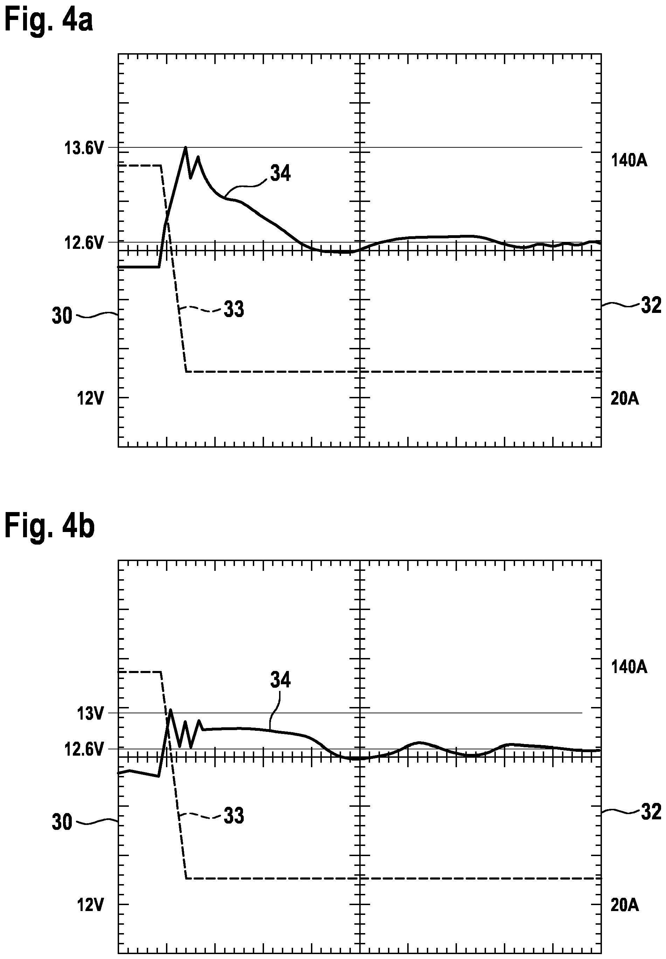

Figs. 4a and 4b further demonstrate measurement results of the converter 1 of the present embodiment.

Therein, an abscissa 31 of the diagrams are time in µs, and a left ordinate 30 is, as Figs. 2a, 3a, voltage in volts V, and a right ordinate 32 is current in ampere A.

As can be taken from a comparison of Fig. 4a, which shows no overshoot control, with Fig. 4b, in which the control unit 10 performs overshoot control as discussed in the foregoing, the resulting output voltage 34 of the converter 1 shows reduced voltage overshoot.

Thus, the control unit 10 provides a fast, reliable and secure operation for preventing voltage overshoot. In particular, the control unit 10 thereby acts as a protection circuit for the converter 1.

In addition to the foregoing written explanations, it is explicitly referred to figures 1 and 3a to 4b, wherein the figures in detail show circuit diagrams, schematic block diagrams, measurement results, and configuration examples of the invention.

### List of Reference Numerals

- 1: Converter
- 2: transformer
- 3: primary side
- 4: secondary side
- 5: primary side circuit
- 6: primary side switch
- 7: secondary side circuit
- 8: secondary side switches
- 10: control unit
- 11: resistor
- 20: voltage output sensing unit
- 21: comparison unit
- 22: voltage controller
- 23: synchronous rectification unit
- 24: primary switching unit
- 25: overshoot control unit
- 26: synchronous rectifier controller unit
- 27: synchronous rectification sensing unit
- 30: (left) ordinate
- 31: abscissa
- 32: (right) ordinate
- 33: load current
- 34: output voltage
- 35: resonant current of the converter
- 36: secondary switch synchronous rectification signal
- 37: secondary switch synchronous rectification signal
- 38: time period of overshoot control operation
- 39: time period of transition operation
- 40: time period of steady-state operation

## Claims

1. Converter (1), especially a resonant LLC converter, comprising:
• a transformer (2) comprising a primary side (3) and a secondary side (4);
• a primary side circuit (5) comprising primary side switches (6) connected to the primary side (3) of the transformer (2);
• a secondary side circuit (7) comprising secondary side switches (8) connected to the secondary side (4) of the transformer (2); and
• a control unit (10) configured to control the primary side switches (6) and the secondary side switches (8); wherein
• the control unit (10) is configured to perform a steady-state operation in which a switching frequency of the primary side switches (6) and of the secondary side switches (8) is controlled to regulate output voltage (Vout) of the converter (2); and
• the control unit (10) is configured to perform an overshoot control operation (38) in which an output voltage spike during a load transient is reduced by setting a control signal for the secondary side switches (8) to low or OFF.

2. Converter (1) according to claim 1, wherein the control unit (10) is configured to perform the steady-state operation before and after the overshoot control operation.

3. Converter (1) according to any one of the foregoing claims, wherein the control unit (10) is configured to control the primary side switches (6) with the same switching frequency during steady-state operation and during overshoot control operation.

4. Converter (1) according to any one of the foregoing claims, wherein the control unit (10) is configured to perform the overshoot control operation for a predetermined time period (38) depending on component parameters, especially depending on an output capacitance (Co) of the converter (1), wherein the predetermined time period (38) is preferably equal to or less than 50 µs.

5. Converter (1) according to any one of the foregoing claims, wherein the control unit (10) is configured to sense the output voltage (Vout) of the converter (1) and compare it with a predetermined threshold value, wherein the control unit (10) is configured to perform the overshoot control operation if the output voltage (Vout) is equal to or greater than the threshold value.

6. Converter (1) according to claim 5, wherein the control unit (10) is configured to calculate a slew rate of the output voltage (Vout), dVout/dt, and wherein the threshold value is a predetermined slew rate threshold value.

7. Converter (1) according to any one of the foregoing claims, wherein the control unit (10) is configured to perform a transition operation (39) after the overshoot control operation to transition to the steady-state operation (40).

8. Converter (1) according to claim 7, wherein the control unit (10) is configured to, in the transition operation, control the secondary side switches (8) with a secondary transition duty cycle, and is configured to, in the steady-state operation, control the secondary side switches (8) with a secondary steady-state duty cycle, wherein the secondary transition duty cycle is lower than the secondary steady-state duty cycle.

9. Converter (1) according to claim 8, wherein the secondary transition duty cycle is time-dependent and especially increases during transition operation.

10. Converter (1) according to any one of the foregoing claims, wherein the secondary side switches (8) respectively comprise body diodes (9) through which current flows during overshoot control operation.

11. Control method for driving a converter (1), the converter comprising a transformer (2) with a primary side (3) and a secondary side (4), a primary side circuit (5) comprising primary side switches (6) connected to the primary side (3) of the transformer (2), and a secondary side circuit (7) comprising secondary side switches (8) connected to the secondary side (4) of the transformer (2); the control method comprising:
• performing a steady-state operation by controlling a switching frequency of the primary side switches (6) and secondary side switches (8) to regulate output voltage of the converter (1); and
• performing an overshoot control operation of setting a control signal for the secondary side switches (8) to low or OFF for reducing an output voltage spike during a load transient.

12. Control method according to claim 11, comprising, in order, performing the steady-state operation, performing the overshoot control operation, and then performing the steady-state operation.

13. Control method according to claim 11 or claim 12, further comprising a transition operation after the overshoot control operation to transition to the steady-state operation.

14. Control method according to claim 13, wherein the secondary transition duty cycle is controlled so as to be time-dependent, and especially so as to increase from the start of the transition operation to the end of the transition operation.

15. Control method according to any one of claims 11 to 14, further comprising sensing output voltage (Vout) of the converter (1) and comparing the sensed output voltage with a predetermined threshold value, wherein the overshoot control operation is performed if the output voltage (Vout) is equal to or greater than the threshold value.
